# EUROPÄISCHE PATENTANMELDUNG

(11) **EP 1 764 516 A2**
(43) Veröffentlichungstag der Anmeldung: **21.03.2007**
(21) Anmeldenummer: 06014308.8
(22) Anmeldetag: 11.07.2006
(51) Int. Cl.: F16B 5/02

(54) **Schraubverbindung mit Toleranzausgleich**

(30) Priorität: 15.09.2005 DE 102005044064
(71) Anmelder: GM Global Technology Operations, Inc., Detroit, MI 48265-3000 (US)
(72) Erfinder: Mildner, Udo, 65550 Limburg (DE)
(74) Vertreter: Daniel, Ulrich W.P.

(57) **Zusammenfassung**

Die Erfindung betrifft eine Schraubverbindung zwischen einem ersten Bauteil (26) und einem zweiten Bauteil (14) mit einem selbstätigem Toleranzausgleich im Abstand zwischen den beiden Bauteilen. Diese umfasst ein erstes Schraubelement (2) mit einem zweiteiligen Außengewinde eines größeren (6) und kleineren (7) Gewindedurchmessers und einer ersten Gangrichtung, ein mit dem zweiten Bauteil fest verbundenes zweites Schraubelement (3) mit einem zum kleineren Außengewinde des ersten Schraubelements passenden Gegengewinde und einem weiteren Gewinde einer zweiten Gangrichtung, sowie eine Toleranzausgleichselement (4) mit einem zum größeren Außengewinde des ersten Schraubelements passenden Gegengewinde und einem zum weiteren Gewinde des zweiten Schraubelements passenden Gegengewinde. Ferner weist die Toleranzausgleichselement einen Klemmabschnitt auf, durch welchen sie mit einer Drehung des ersten Schraubelements mitgedreht werden kann.

## Beschreibung

Die vorliegende Erfindung betrifft eine Schraubverbindung mit Toleranzausgleich zum selbstätigen Ausgleich von Toleranzen im Abstand von zwei Bauteilen, welche bei deren Fertigung bzw. Montage auftreten können.

Toleranzausgleichsanordnungen mit der Möglichkeit Toleranzen im Abstand zwischen zu fügenden Bauteilen auszugleichen, werden heutzutage in der industriellen Serienfertigung standardmäßig eingesetzt. So tritt beispielsweise in der Automobilfertigung beim Einbau von Frontscheinwerfern aufgrund von stark variierenden Konturen und Fugenverläufen der Karosserie häufig der Fall auf, dass vergleichsweise große Fertigungs- bzw. Montagetoleranzen ausgeglichen werden müssen, um einen passgenauen Einbau der Frontscheinwerfer zu den Kotflügeln und der Motorhaube zu erreichen. Hierbei kann eine Ausrichtung der Scheinwerfer zu den Kotflügeln vergleichsweise problemlos durch Kunststoffzentriermuttern erfolgen, während im unteren Bereich der Scheinwerferausschnitte über einstellbare Blechhalter, die während der Kotflügelmontage genau positionert werden, eine genaue Fugenanpassung der Schweinwerfer erreicht werden kann. Jedoch hat sich auch gezeigt, dass eine Ausrichtung der Frontscheinwerfer an einem mittleren Kotflügelbefestigungspunkt nur mit einem großen Aufwand passgenau zu realisieren ist. Darüber hinaus verschlechtert sich Toleranzkette noch durch einen zu berücksichtigenden Fußgängerschutz mit kollabierbaren Kotflügelhaltern und der Verwendung von Frontend-Modulen. Ein guter Fugenverlauf kann in diesem Fall nur mittels einem toleranzausgleichenden Befestigungssystem erzielt werden.

Zu diesem Zweck sind bereits verschiedene Lösungsvorschläge gemacht worden, welche zum Teil auch Eingang in die industrielle Serienfertigung gefunden haben. So ist die Verwendung von Doppelhaltern mit verschraubbaren Klammern als Toleranzausgleichsanordnung bekannt. Hierbei ist der zusätzliche Halter an einem vertikalen Befestigungsflansch am Scheinwerfer vormontiert und relativ zu diesem in Fahrzeuglängsrichtung verschiebbar. Bei Montage des Scheinwerfers wird der zusätzliche Halter an einer ebenfalls vertikalen karosserieseitigen Wandung so befestigt, dass Toleranzen in den beiden anderen Raumrichtungen ausgeglichen werden können. Dieses System erlaubt somit die Einstellung des Scheinwerfers in den Raumrichtungen. Nachteilig hierbei ist vor allem, dass zwei Schraubvorgänge für die Befestigung der Scheinwerfer erforderlich sind.

Weiterhin sind Toleranzausgleichsanordnungen bekannt, bei denen für den Toleranzausgleich im Abstand zwischen den zu fügenden Bauteilen, neben einer mit einem der Bauteile fest verbundenen Mutter und einer mit der Mutter zum Verspannen der Bauteile verschraubbaren Schraube mit Rechtsgewinde, ein in die Mutter eingeschraubtes Ausgleichselement mit einem Linksgewinde, sowie ein Federklemmabschnitt zum Klemmen der hindurchgehenden Schraube vorgesehen ist. Wird bei einer solchen Toleranzausgleichsanordnung die Schraube durch fluchtende Löcher der beiden Bauteile hindurch gesteckt und mit der Mutter zum Verspannen der beiden Bauteile verschraubt, so wird das Ausgleichselement durch den Federklemmabschnitt mit der sich drehenden Schraube mitgedreht und aus der Mutter heraus geschraubt, bis es zur Anlage gegen das zu montierende Bauteil gelangt und einen Toleranzausgleich zwischen den beiden Bauteilen ermöglicht. Nachteilig hierbei ist vor allem, dass, bedingt durch das typische Setzverhalten bei einem zu befestigenden Kunststoffanbauteil, einem vergleichsweise geringen Anziehdrehmoment und der damit verbundenen geringen Vorspannkraft des Toleranzausgleichsanordnung, sowie insbesondere durch Vibrationen im Fahrbetrieb, ein Lösen/Lockern der Schraubverbindung auftreten kann. Ein solches Lösen/Lockern der Schraubverbindung kann auch durch in der Toleranzausgleichsanordnung vorhandene Federelemente nur bedingt verhindert werden. Eine Vermeidung dieses Problems könnte beispielsweise dadurch erreicht werden, dass an den Schraubstellen im Scheinwerfer Metallbuchsen eingesetzt werden, welche ein höheres Anziehdrehmoment zulassen, was jedoch mit einem höheren Fertigungs- und Kostenaufwand verbunden ist. Eine weiterer Nachteil solcher Toleranzausgleichsanordnungen sind generell die vergleichsweise hohen Produkt- und Fertigungskosten.

Demgegenüber besteht eine Aufgabe der vorliegenden Erfindung darin, eine verbesserte Schraubverbindung mit selbstätigem Toleranzausgleich insbesondere für ein Fahrzeug, wie ein Kraftfahrzeug, zur Verfügung zu stellen, mit welcher die vorgenannten Nachteile vermieden werden können. Inbesondere soll durch eine solche Schraubverbindung ein Lösen/Lockern durch im Fahrbetrieb auftretende Vibrationen auch bei für Kunststoffanbauteile typischen geringen Anziehdrehmomenten vermieden werden.

Diese Aufgabe wird nach dem Vorschlag der Erfindung durch eine Schraubverbindung zwischen einem ersten Bauteil und einem zweiten Bauteil mit einem selbstätigem Toleranzausgleich im Abstand zwischen den beiden Bauteilen mit den Merkmalen des unabhängigen Anspruchs gelöst. Vorteilhafte Ausgestaltungen der Erfindung sind durch die Merkmale der Unteransprüche angegeben.

Erfindungsgemäß ist eine Schraubverbindung (bzw. Toleranzausgleichsanordnung) zwischen einem ersten Bauteil und einem zweiten Bauteil mit einem selbstätigem Toleranzausgleich im Abstand zwischen den beiden Bauteilen, insbesondere für ein Fahrzeug, wie ein Kraftfahrzeug, gezeigt, welche ein erstes Schraubelement, ein zweites Schraubelement und ein Toleranzausgleichselement umfasst.

Das erste Schraubelement ist hierbei mit einem Kopfabschnitt und einem mit dem Kopfabschnitt verbundenen, ein Außengewinde tragenden, stiftartigen Gewindeabschnitt versehen. Das erste Schraubelement ist mit seinem stiftartigen Gewindeabschnitt durch wenigstens das erste der beiden Bauteile oder beide Bauteile hindurch steckbar und mit seinem Kopfteil an dem ersten Bauteil abstützbar. Das erste Schraubelement kann hierbei insbesondere mittels einer am Kopfabschnitt angeordneten Beilagscheibe am ersten Bauteil abgestützt sein.

In der erfindungsgemäßen Schraubverbindung ist das erste Schraubelement so ausgebildet, dass der stiftartige Gewindeabschnitt zwei Außengewinde verschiedenen Gewindedurchmessers umfasst, wobei ein erstes Außengewinde mit einer ersten Gangrichtung und einem ersten Gewindedurchmesser und ein zweites Außengewinde mit der ersten Gangrichtung und einem zweiten Gewindedurchmesser, welcher kleiner ist als der erste Gewindedurchmesser, vorgesehen sind. Das erste Außengewinde hierbei im Allgemeinen näher zum Kopfabschnitt des ersten Schraubelements angeordnet als das zweite Außengewinde.

In der erfindungsgemäßen Schraubverbindung ist das zweite Schraubelement mit dem zweiten Bauteil fest verbunden, so dass beim Verschrauben des, durch das erste Bauteil hindurch gesteckten, ersten Schraubelements mit dem zweiten Schraubelement die beiden zu fügenden Bauteile miteinander verspannt werden können. Zur festen Verbindung des zweiten Schraubelements mit dem zweiten Bauteil kann vorteilhaft ein mit dem zweiten Bauteil verrastbares Rastmittel, insbesondere in Form von elastisch federnden Rastzungen, vorgesehen sein. Alternativ hierzu kann das zweite Schraubelement durch ein form-/kraftschlüssiges Verbindungsmittel, insbesondere beispielsweise eine Schweißverbindung und/oder eine Nietverbindung und/oder eine Schraubverbindung und/oder eine Klebstoffverbindung und/oder einer Exzenterverbindung und/oder einem Bajonettverschluss, mit dem zweiten Bauteil fest verbunden sein. Jedoch kann es auch vorteilhaft sein, dass das zweite Schraubelement mit dem zweiten Bauteil einstückig ausgebildet ist. Alternativ hierzu kann das zweite Schraubelement auch mit einem weiteren Anbauteil fest verbunden oder einstückig ausgebildet sein, welches dann seinerseits mit dem zweiten Bauteil fest verbunden werden kann.

Das zweite Schraubelement weist zum Verschrauben mit dem ersten Schraubelement ein erstes Gewinde in Form eines Schraublochs auf, das ein zum zweiten Außengewinde des ersten Schraubelements passendes Gegengewinde der ersten Gangrichtung ist, so dass das zweite Außengewinde des ersten Schraubelements mit dem ersten Gewinde des zweiten Schraubelements verschraubbar ist. Ferner weist das zweite Schraubelement ein weiteres, zweites Gewinde mit einer, zur ersten Gangrichtung verschiedenen, zweiten Gangrichtung zum Verschrauben mit dem Toleranzausgleichselement auf.

Das Toleranzausgleichselement ist zum Verschrauben mit dem zweiten Schraubelement mit einem ersten Gewinde versehen, das ein zum zweite Gewinde des zweiten Bauteils passendes Gegengewinde der zweiten Gangrichtung ist, wobei dieses ein Innengewinde oder ein Außengewinde sein kann, je nachdem ob es sich bei dem zweiten Gewinde des zweiten Schraubelements um ein Innengewinde oder ein Außengewinde handelt. Weiterhin ist das Toleranzausgleichselement zum Verschrauben mit dem ersten Schraubelement mit einem zweiten Gewinde in Form eines Schraublochs versehen, wobei das zweite Gewinde ein zum ersten Außengewinde des ersten Schraubelements passendes Innengewinde der ersten Gangrichtung ist. Insofern kann das erste Schraubelement über sein erstes Außengewinde mit dem zweiten Gewinde des Toleranzausgleichselement und über sein zweites Außengewinde mit dem ersten Gewinde des zweiten Schraubelements verschraubt werden, so dass eine gleichzeitige Verschraubung des ersten Schraubelements mit dem Toleranzausgleichselement und dem zweiten Schraubelement im montierten Zustand ermöglicht ist. Bedingt durch den größeren Gewindedurchmesser des ersten Außengewindes des ersten Schraubelements im Vergleich zu dem Gewindedurchmesser des zweiten Außengewindes des ersten Schraubelements, hat auch das zweite Gewinde des Toleranzausgleichselements, das mit dem ersten Außengewinde des ersten Schraubelements verschraubbar ist, einen größeren Durchmesser als das zweite Außengewinde des ersten Schraubelements, so dass das zweite Außengewinde des ersten Schraubelements zur Verschraubung mit dem zweiten Schraubelement unbeeinträchtigt durch das zweite Gewinde des Toleranzausgleichselements hindurch geführt werden kann.

Das Toleranzausgleichselement ist weiterhin mit einem Klemmabschnitt versehen, durch welchen das Toleranzausgleichselement mit dem ersten Schraubelement durch Reibschluss verbindbar ist, wohingegen es bei Überwindung des Reibschlusses relativ zum ersten Schraubelement bewegbar, insbesondere drehbar, ist. Ein solcher Klemmabschnitt kann vorteilhaft in Form einer elastisch aufweitbaren Federklemme mit einem kleineren Durchmesser als der zweite Gewindedurchmesser des zweiten Außengewindes des ersten Schraubelements ausgebildet sein. Eine solche Federklemme kann beispielsweise eine Mehrzahl von fingerförmigen Federzungen umfassen.

Das Vorsehen eines wie oben beschriebenen Klemmabschnitts hat zur Folge, dass ein mit dem zweiten Schraubelement verschraubtes Toleranzausgleichselement bei Verschrauben des, durch das erste Bauteil hindurch gesteckten, ersten Schraubelements mit dem zweiten Schraubelement durch Reibschluss mit dem ersten Schraubelement mitdreht und wegen des andersgängigen Gewindes aus dem zweiten Schraubelement zum Zwecke des Toleranzausgleichs herausgeschraubt wird, bis es zur Anlage gegen das erste Bauteil gelangt. Nach Anlegen des Toleranzausgleichselements an das erste Bauteil kann das erste Schraubelement unter Überwindung des Reibschlusses zwischen zwischen ihm und dem Toleranzausgleichselement in das Toleranzausgleichselement eingeschraubt werden, wobei sich das erste Außengewinde des ersten Schraubelements in das zweite Gewinde des Toleranzausgleichselements einschraubt. Somit ist das erste Schraubelement, nach Anlegen des Toleranzausgleichselements an das erste Bauteil, mit dem Toleranzausgleichselement und dem zweiten Schraubelement zum Verspannen der beiden Bauteile verschraubbar. Um eine genügend große Anlagefläche zur Anlage des Toleranzausgleichselements an das erste Bauteil zur Verfügung zu haben, welche insbesondere eine guten Reibschluss zwischen dem an das erste Bauteil angelegten Toleranzausgleichselement und dem ersten Bauteil gewährleistet, kann das Toleranzausgleichselement mit einem Flansch versehen sein, der in geeigneter Weise so angeordnet ist, dass er im montierten Zustand zur Anlage gegen das erste Bauteil gelangt.

Die erfindungsgemäße Schraubverbindung mit selbstätigem Toleranzausgleich bietet somit gegenüber herkömmlichen Toleranzausgleichsanordnungen mit Schraubverbindung den Vorteil, dass ein Lösen/Lockern der Schraubverbindung, bedingt durch Vibrationen im Fahrbetrieb, selbst bei geringen, kunststoffüblichen Anziehdrehmomenten für Kunststoffanbauteile aufgrund der gleichzeitigen Verschraubung des ersten Schraubelements mit dem Toleranzausgleichselement und dem zweiten Schraubelement ausgeschlossen ist. Insofern sind auch nur geringe Anziehdrehmomente für die Befestigung eines Anbauteils (erstes Bauteil) erforderlich. Zudem kann das kunsstoffübliche Setzungsverhalten nach dem Verschrauben vermieden werden. Weiterhin kann die erfindungsgemäße Schraubverbindung kostengünstig mit vergleichsweise geringen Produkt- und Fertigungskosten in der industriellen Serienfertigung hergestellt und eingebaut werden.

Die erfindungsgemäße Schraubverbindung kann demnach insbesondere dann vorteilhaft eingesetzt werden, wenn wenigstens eines der beiden Bauteile eine Kunststoffbauteil ist, da ein typisches Setzverhalten des Kunststoffbauteils keine Auswirkung auf eine Lösen/Lockern der Schraubverbindung hat und für eine stabile und dauerhafte Schraubverbindung lediglich kunstoffübliche, vergleichsweise geringe Anziehdrehmomente erforderlich sind. Das erste Bauteil kann somit insbesondere ein Kunstoffanbauteil, wie ein Fahrzeugscheinwerfer, und das zweite Bauteil ein Karosserieabschnitt eines Fahrzeugs, insbesondere Kraftfahrzeugs, sein.

Die Erfindung erstreckt sich ferner auf eine Scheinwerferhalterungsanordnung in einem Fahrzeug, insbesondere Kraftfahrzeug, welche wenigstens eine wie oben beschriebenen Schraubverbindung aufweist, sowie auf ein Fahrzeug, insbesondere Kraftfahrzeug, mit wenigstens einer wie oben beschriebenen Schraubverbindung.

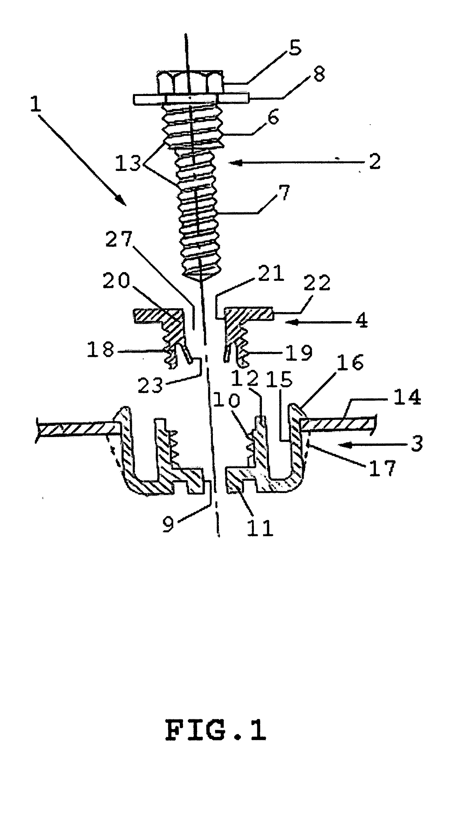

Die Erfindung wird nun anhand eines Ausführungsbeispiels näher erläutert, wobei Bezug auf die beigefügten Zeichnungen genommen wird. Es zeigen
- Fig. 1: eine schematische Teilschnittansicht der erfindungsgemäßen Schraubverbindung in einer Explosionsdarstellung;
- Fig. 2: eine schematische Teilschnittansicht der erfindungsgemäßen Schraubverbindung von Fig. 1 im montierten Zustand.
Zunächst wird Bezug auf Figur 1 genommen, worin eine schematische Teilschnittansicht der erfindungsgemäßen Schraubverbindung in einer Explosionsdarstellung gezeigt ist. Demnach umfasst eine erfindungsgemäße Schraubverbindung (Toleranzausgleichsanordnung), welche insgesamt mit der Bezugszahl 1 bezeichnet ist, ein erstes Schraubelement, welches insgesamt mit der Bezugszahl 2 bezeichnet ist, ein zweites Schraubelement, welches insgesamt mit der Bezugszahl 3 bezeichnet ist, und ein Toleranzausgleichselement, welches insgesamt mit der Bezugszahl 4 bezeichnet ist.

Das erste Schraubelement 2 ist aus einem Kopfabschnitt 5 und einem mit dem Kopfabschnitt verbundenen, stiftartigen, Gewindeabschnitt 13 mit Außengewinde aufgebaut, wobei letzterer seinerseits aus einem ersten Außengewinde 6 mit einer ersten Gangrichtung und einem ersten Gewindedurchmesser und einem zweiten Außengewinde 7 der ersten Gangrichtung und einem zweiten Gewindedurchmesser, welcher kleiner ist als der erste Gewindedurchmesser, zusammengesetzt ist. Hierbei ist das erste Außengewinde 6 mit größerem Gewindedurchmesser näher am Kopfabschnitt 5 als das zweite Außengewinde 7 mit kleinerem Gewindedurchmesser angeordnet. Am Kopfabschnitt 5 des ersten Schraubelements 1 ist ferner eine Beilagscheibe 8 bis zur Anlage gegen den Kopfabschnitt 5 aufgerollt. Das erste Außengewinde 6 und das zweite Außengewinde 7 sind jeweils als ein Rechtsgewinde ausgeführt.

Das zweite Schraubelement 3 ist zum Verschrauben mit dem ersten Schraubelement 2 mit einem in einem hülsenförmigen, ersten Gewindeabschnitt 11 angeordneten, nicht näher dargestellten ersten Gewinde in Form eines Schraublochs 9, versehen, das ein zum zweiten Außengewinde 7 des ersten Schraubelements 2 passendes, rechtsgängiges Innengewinde ist, so dass das zweite Außengewinde 7 des ersten Schraubelements 2 mit dem Schraubloch 9 des zweiten Schraubelements 3 verschraubbar ist. Weiterhin ist das zweite Schraubelement 3 mit einem, in einem hülsenförmigen, zweiten Gewindeabschnitt 12 angeordneten, zweiten Gewinde 10 versehen, das ein linksgängiges Innengewinde ist. Die beiden hülsenförmigen Gewindeabschnitte 11, 12 des zweiten Schraubelements 3 mit den jeweiligen Gewinden sind so angeordnet, dass deren Mittelachsen im Wesentlichen fluchten. Das zweite Gewinde 10 weist hierbei einen größeren Gewindedurchmesser auf als das Schraubloch 9. Weiterhin ist das zweite Schraubelement 3 mit dem lediglich teilweise dargestellten, zweiten Bauteil 14, bei dem es sich um einen Karosserieabschnitt handeln kann, fest verbunden. Zu diesem Zweck ist das zweite Bauteil mit in Hülsenform angeordneten, elastisch federnden Rastzungen 15 versehen, die mit Nasen 16 das zweite Bauteil 14 umgreifen. Am zweiten Bauteil 14 können hierzu speziell geformte Raststellen vorgesehen sein, was hier nicht näher dargestellt ist. Seitlich der Rastzungen 14 sind Stützrippen 17 ausgebildet, welche das Bauteil 14 stützen und hierbei die Verrastung des zweiten Bauteils 14 sichern. Alternativ, was hier nicht dargestellt ist, kann das zweite Schraubelement 3 einstückig mit dem zweiten Bauteil 14 ausgebildet sein. Weiter alternativ kann das zweite Schraubelement 3 mit einem separaten Anbauteil fest verbunden oder einstückig ausgebildet sein, wobei das separate Anbauteil seinerseits mit dem zweiten Bauteil 14 fest verbunden werden kann.

Das Toleranzausgleichselement 4 ist zum Verschrauben mit dem zweiten Schraubelement 3 mit einem ein erstes Gewinde aufweisenden Schraubloch 19 versehen, das auf einem hülsenförmigen Gewindeabschnitt 18 geformt ist. Das Schraubloch 19 hat ein zum zweiten Gewinde 10 des zweiten Bauteils passendes, linksgängiges Außengewinde. Weiterhin ist das Toleranzausgleichselement 4 zum Verschrauben mit dem ersten Schraubelement 2 mit einem nicht näher dargestellten zweiten Gewinde 21 versehen, das auf einem hülsenförmigen Gewindeabschnitt 20 geformt ist. Das zweite Gewinde 21 ist ein zum ersten Außengewinde 6 des ersten Schraubelements 2 passendes, rechtsgängiges Innengewinde. Die beiden hülsenförmigen Gewindeabschnitte 18, 20 des Toleranzausgleichselements 4 sind so angeordnet,dass deren Mittelachsen im Wesentlichen fluchten. Das erste Gewinde des Schraublochs 19 weist hierbei einen größeren Gewindedurchmesser auf als das zweite Gewinde 21. Das Toleranzausgleichselement 4 ist weiterhin mit einer Mehrzahl von hülsenförmig angeordneten, fingerförmigen Federzungen 23 versehen, die eine elastisch aufweitbare Federklemme mit einem kleineren Durchmesser als der zweite Gewindedurchmesser des zweiten Außengewindes 7 des ersten Schraubelements 2 formen. Die Federzungen 23 ragen hierbei von dem das zweite Gewinde 19 tragenden, hülsenförmigen Gewindeabschnit 20 mit einer zur Mittelachse des hülsenförmigen Gewindabschnitts 20 geneigten Richtung ab. Weiterhin ist das Toleranzausgleichselement 4 mit einem Flansch 22 zur Anlage gegen das erste Bauteil im montierten Zustand versehen.

Wie Figur 1 zu entnehmen ist, sind in dem gezeigten Ausführungsbeispiel die jeweiligen Geweinde des ersten Schraubelements 2, des zweiten Schraubelements 3 und des Toleranzausgleichselements 4 mit ihren jeweiligen Mittelachsen fluchtend entlang der Achse 24 angeordnet.

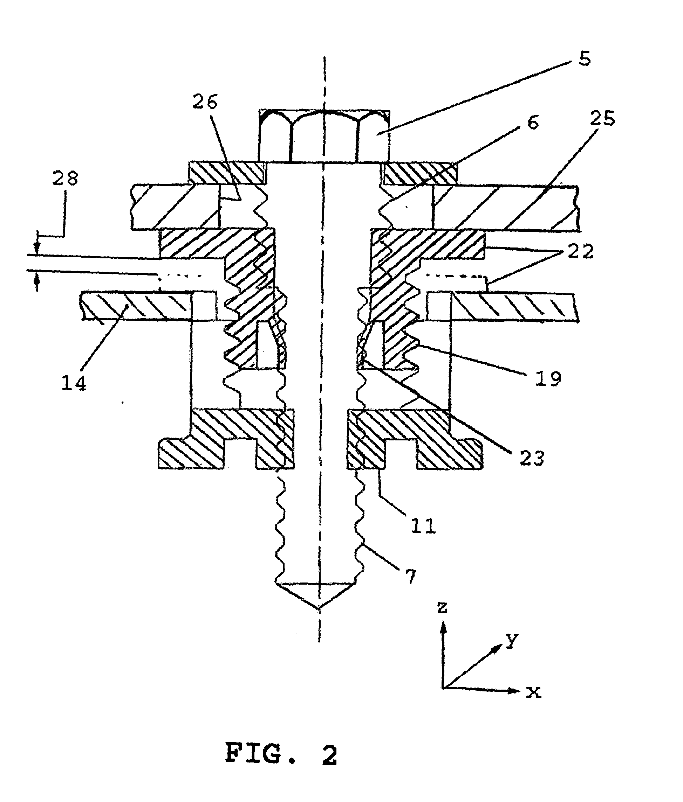

Es wird nun weiterer Bezug auf die Figur 2 genommen, worin eine schematische Teilschnittansicht der erfindungsgemäßen Schraubverbindung von Fig. 1 im montierten Zustand gezeigt ist.

Eine Montage der erfindungsgemäßen Schraubverbindung, um zu dem in Fig. 2 gezeigten montierten Zustand zu gelangen, kann wie folgt durchgeführt werden:
Zunächst wird das Toleranzausgleichselement 4 mit dem mit dem zweiten Bauteil 14 über die Rastzungen 15 und die Stützrippen 17 fest verbundenen, zweiten Schraubelement verschraubt, zu welchem Zweck das linksgängige, erste Gewinde 19 mit dem linksgängigen, zweiten Gewinde 10 verschraubt wird. Anschließend wird der stiftartige Gewindeabschnitt 13 durch eine entsprechende Durchbrechung 26 des ersten Bauteils 25, welches in Fig. 2 lediglich teilweise dargestellt ist und bei welchem es sich beispielsweise um einen Scheinwerfer handeln kann, hindurch gesteckt, dann durch die Öffnung 27 des Toleranzausgleichselements 4 geschoben und durch sein zweites Außengewinde 7 mit dem das erste Gewinde tragenden Schraubloch 9 des zweiten Schraubelements 3 verschraubt. Die dem zweiten Außengewinde 7 des ersten Schraubelements 2 anliegenden Federzungen führen durch Reibschluss dazu, dass beim Eindrehen des ersten Schraubelements 2 in das zweite Schraubelement 3 das Toleranzausgleichselement 4 von dem zweiten Schraubelement 3 heraus geschraubt wird, bis es mit seinem Flansch 22 zur Anlage gegen das erste Bauteil 25 gelangt. Der dann erzeugte Reibschluss zwischen dem Flansch 22 und dem ersten Bauteil 25 hat zur Folge, dass der Reibschluss zwischen dem zweiten Außengewinde 7 des ersten Schraubelements 2 und den Federzungen 23 des Toleranzausgleichselements 4 überwunden wird, so dass das Toleranzausgleichselement 4 relativ zum ersten Schraubelement 2 bewegbar, d.h. drehbar, wird. Wird nun das erste Schraubelement 2 weiterhin mit dem zweiten Schraubelement 3 verschraubt, so wird das erste Schraubelement 2 mit seinem ersten Außengewinde 6 in das Schraubloch 21 mit dem zweiten Gewinde des Toleranzausgleichselements 4 eingeschraubt, bis das erste Schraubelement 2 mit seiner Beilagscheibe 8 zur Anlage gegen das erste Bauteil 25 gelangt und das erste Bauteil 25 mit dem zweiten Bauteil 14 verspannt ist. Wie dem montierten Zustand von Fig. 2 zu entnehmen ist, ist das erste Schraubelement 2 im montierten Zustand der Schraubverbindung sowohl mit dem Toleranzausgleichselement 4 als auch mit dem zweiten Schraubelement 3 verschraubt, was der Schraubverbindung eine besondere Festigkeit gegen ein Lösen/Lockern, insbesondere bei im Fahrbetrieb auftretenden Vibrationen, vermittelt. In der erfindungsgemäßen Schraubverbindung kann durch das Toleranzausgleichselement 4 eine maximale Abstandstoleranz 28 in z-Richtung zwischen den beiden Bauteilen 14, 25 ausgeglichen werden. Zur Veranschaulichung der maximalen Toleranzausgleichs in z-Richtung ist in Fig. 2 eine dem zweiten Bauteil 14 anliegende Stellung des Toleranzausgleichselements 4 gestichelt skizziert. Da das erste Bauteil 25 mit einer Durchbrechung 26 versehen ist, die in x-Richtung und in y-Richtung Spiel aufweist, kann in der erfindungsgemäßen Schraubanordnung zudem ein Toleranzausgleich in x-Richtung und in y-Richtung erfolgen.

### Bezugszeichenliste

- 1: Schraubverbindung
- 2: erstes Schraubelement
- 3: zweites Schraubelement
- 4: Toleranzausgleichselement
- 5: Kopfabschnitt
- 6: erstes Außengewinde
- 7: zweites Außengewinde
- 8: Beilagscheibe
- 9: Schraubloch des zweiten Schraubelements
- 10: zweites Gewinde des zweiten Schraubelements
- 11: hülsenförmiger Gewindeabschnitt
- 12: hülsenförmiger Gewindeabschnitt
- 13: Gewindeabschnitt des ersten Schraubelements
- 14: zweites Bauteil
- 15: Rastzunge
- 16: Rastnase
- 17: Stützrippe
- 18: hülsenförmiger Gewindeabschnitt
- 19: erstes Gewinde des Toleranzausgleichselements
- 20: hülsenförmiger Gewindeabschnitt
- 21: Schraubloch des Toleranzausgleichselements
- 22: Flansch
- 23: Federzunge
- 24: Achse
- 25: erstes Bauteil
- 26: Durchbrechung
- 27: Öffnung
- 28: Toleranzausgleich in z-Richtung

## Patentansprüche

1. Schraubverbindung zwischen einem ersten Bauteil (14) und einem zweiten Bauteil (25) mit einem selbstätigem Toleranzausgleich im Abstand zwischen den beiden Bauteilen, insbesondere für ein Fahrzeug, insbesondere Kraftfahrzeug, welche umfasst:
ein erstes Schraubelement (2) mit einem Kopfabschnitt (5) und einem damit verbundenen, ein Außengewinde tragenden, stiftartigen Gewindeabschnitt (13), wobei das erste Schraubelement (2) mit seinem stiftartigen Gewindeabschnitt (13) durch wenigstens das erste Bauteil (25) hindurch steckbar und mit seinem Kopfteil (5) an dem ersten Bauteil (25) abstützbar ist; der stiftartige Gewindeabschnitt (13) ein erstes Außengewinde (6) mit einer ersten Gangrichtung und einem ersten Gewindedurchmesser und ein zweites Außengewinde (7) mit der ersten Gangrichtung und einem zweiten Gewindedurchmesser, welcher kleiner ist als der erste Gewindedurchmesser, aufweist;
ein mit dem zweiten Bauteil (14) fest verbundenes, zweites Schraubelement (3) mit einem ersten Gewinde (9) und einem zweiten Gewinde (10), wobei das erste Gewinde (3) ein zum zweiten Außengewinde (7) des ersten Schraubelements (2) passendes Gegengewinde der ersten Gangrichtung ist, und das zweite Gewinde (10) eine zweite Gangrichtung hat,
ein Toleranzausgleichselement (4) mit einem ersten Gewinde (19) und einem zweiten Gewinde (21), wobei das erste Gewinde (19) ein zum zweiten Gewinde (10) des zweiten Bauteils (14) passendes Gegengewinde der zweiten Gangrichtung ist und das zweite Gewinde (21) ein zum zweiten Außengewinde (7) des ersten Schraubelements (2) passendes Innengewinde der ersten Gangrichtung ist; das Toleranzausgleichselement (4) mit einem Klemmabschnitt (23) versehen ist, durch welchen das Toleranzausgleichselement (4) mit dem ersten Schraubelement (2) durch Reibschluss verbindbar ist, während es bei Überwindung des Reibschlusses relativ zum ersten Schraubelement (2) bewegbar ist, so dass ein mit dem zweiten Schraubelement (3) verschraubtes Toleranzausgleichselement (4) bei Verschrauben des ersten Schraubelements (2) mit dem zweiten Schraubelement (3) durch Reibschluss mit dem ersten Schraubelement (2) mitdreht und **dadurch** aus dem zweiten Schraubelement (3) zum Zwecke des Toleranzausgleichs herausgeschraubt wird, wobei das erste Schraubelement (2) nach Anlegen des Toleranzausgleichselements (4) an das erste Bauteil (2) mit dem Toleranzausgleichselement (4) und dem zweiten Schraubelement (3) zum Verspannen der beiden Bauteile (25, 14) verschraubbar ist.

2. Schraubverbindung nach Anspruch 1, bei welcher das zweite Schraubelement zur festen Verbindung mit dem zweiten Bauteil mit einem mit dem zweiten Bauteil verrastbaren Rastmittel versehen ist.

3. Schraubverbindung nach Anspruch 1, bei welcher das zweite Schraubelement durch ein form-/kraftschlüssiges Verbindungsmittel, insbesondere gewählt aus einer Schweißverbindung, einer Nietverbindung, einer Schraubverbindung, einer Klebstoffverbindung, einer Exzenterverbindung und einem Bajonettverschluss, mit dem zweiten Bauteil fest verbunden ist.

4. Schraubverbindung nach Anspruch 1, bei welcher das zweite Schraubelement mit dem zweiten Bauteil einstückig ausgebildet ist.

5. Schraubverbindung nach einem der vorhergehenden Ansprüche, bei welcher der Klemmabschnitt des Toleranzausgleichselements in Form einer elastisch aufweitbaren Federklemme mit einem kleineren Durchmesser als der zweite Gewindedurchmesser des zweiten Außengewindes des ersten Schraubelements ausgebildet ist.

6. Schraubverbindung nach Anspruch 5, bei welcher die Federklemme eine Mehrzahl von fingerförmigen Federelementen umfasst.

7. Schraubverbindung nach einem der vorhergehenden Ansprüche, bei welcher das Toleranzausgleichselement mit einem Flansch zur Anlage gegen das erste Bauteil im montierten Zustand versehen ist.

8. Schraubverbindung nach einem der vorhergehenden Ansprüche, bei welcher das erste Schraubelement mittels einer am Kopfabschnitt angeordneten Beilagscheibe am ersten Bauteil abgestützt ist.

9. Schraubverbindung nach einem der vorhergehenden Ansprüche, bei welcher wenigstens eines der beiden Bauteile eine Kunststoffbauteil ist.

10. Schraubverbindung nach Anspruch 9, bei welcher das erste Bauteil ein Kunstoffanbauteil und das zweite Bauteil ein Karosserieabschnitt eines Fahrzeugs, insbesondere Kraftfahrzeugs, ist.

11. Schraubverbindung nach Anspruch 10, bei welcher das erste Bauteil ein Fahrzeugscheinwerfer und das zweite Bauteil ein Karosserieabschnitt eines Fahrzeugs, insbesondere Kraftfahrzeugs, ist.

12. Scheinwerferhalterungsanordnung mit einer Schraubverbindung nach einem der vorhergehenden Ansprüche 1 bis 8.

13. Fahrzeug, insbesondere Kraftfahrzeug, mit wenigstens einer Schraubverbindung nach einem der vorhergehenden Ansprüche 1 bis 8.
